(19) Europäisches Patentamt
European Patent Office
Office européen des brevets

(11) EP 2 933 012 A1

(12) EUROPEAN PATENT APPLICATION

(43) Date of publication:
**21.10.2015 Bulletin 2015/43**

(51) Int Cl.:
***B01D 67/00*** *(2006.01)* ***B01D 71/32*** *(2006.01)*
***B01D 71/34*** *(2006.01)*

(21) Application number: **14305547.3**

(22) Date of filing: **14.04.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
- **Solvay Specialty Polymers Italy S.p.A.**
  **20021 Bollate (MI) (IT)**
- **Rhodia Operations**
  **93306 Aubervilliers Cedex (FR)**

(72) Inventors:
- **Di Nicolo, Emanuele**
  **20037 Paderno Dugnano (MI) (IT)**
- **Bourdette, Arnaud**
  **77500 Chelles (FR)**
- **Lanson, David**
  **92120 Montrouge (FR)**
- **Sanguineti, Aldo**
  **20133 Milano (MI) (IT)**

(74) Representative: **Benvenuti, Federica et al**
**Solvay S.A.**
**Département de la Propriété Intellectuelle**
**Rue de Ransbeek, 310**
**1120 Bruxelles (BE)**

# (54) Method for manufacturing porous fluoropolymer membrane

(57) The invention pertains to a method for manufacturing a fluoropolymer membrane comprising the steps of:
(i) preparing a fluoropolymer [solution (SF)] comprising:
- at least one fluoropolymer [polymer (F)];
- at least one polymeric pore forming agent [agent (P)];
- a solvent mixture [mixture (M)] comprising an amount exceeding 50 % wt of N,N-dimethylmethoxyacetamide, with respect to the total weight of the mixture (M);

(ii) processing said solution (SF) into a film;
(iii) immersing said film in a non-solvent bath.

EP 2 933 012 A1

## Description

### Technical Field

The present invention relates to a method for the manufacture of porous membranes of vinylidene fluoride polymer. In particular the invention relates to a method comprising using certain vinylidene fluoride polymer solutions.

### Background Art

Fluorinated polymers based on vinylidene fluoride are widely used in the preparation of microfiltration and ultrafiltration membranes due to their good thermal stability, chemical resistance, excellent processability and convenience in controlling the porosity and the morphology of said membranes.

Manufacturing techniques for industrial production of membranes generally include the preparation of solutions of vinylidene fluoride polymers in suitable solvents, in combination with suitable pore-forming agents. According to these techniques, a clear polymer solution is precipitated into two phases: a solid, polymer-rich phase that forms the matrix of the membrane, and a liquid, polymer-poor phase that forms the membrane pores. Polymer precipitation from a solution can be achieved in several ways, such as cooling, solvent evaporation, precipitation by immersion in water, or imbibition of water from the vapor phase. If precipitation is rapid, the pore-forming liquid droplets tend to be small and the membranes formed are markedly asymmetric. If precipitation is slow, the pore-forming liquid droplets tend to agglomerate while the casting solution is still fluid, so that the final pores are relatively large and the membrane structure is more symmetrical. Generally, the pore forming agent is leached during the vinylidene fluoride polymer precipitation, although other techniques can be used.

In these techniques, it remains nevertheless key to provide for stable and homogeneous solutions of VDF polymer and of suitable pore forming agents, as starting material.

The vast majority of vinylidene fluoride-based polymers can be readily dissolved in certain highly polar solvents and certain chlorinated solvents to form stable solutions. These powerful solvents include N-methylpyrrolidone (NMP), N, N-dimethylacetamide (DMAc), pyridine, and aniline, 1,1,2-trichloroethane and 1,1,2,2-tetrachloroethane.

Pyridine, aniline and chlorinated solvents are less desirable because of their potentially harmful health effects.

With regards to NMP and DMAc, which have been since years the solvents of choice in the industry for solution-based hollow-fiber spinning processes in the manufacture of PVDF asymmetric membranes, these solvents are now focusing environmental and safety concerns, having regards to the safety risks associated to their handling and to possible leakage/emissions in the environment, so questing for substitution.

For instance, NMP has been notably classified according to the European regulation (EC) No1272/2008 in the hazard class Repr.1B code H360D (may damage the unborn child), Eye Irrit.2 code H319, STOT SE 3 code H335, Skin Irrit.2 H315 and according to the European directive 67/548/EEC it is classified as Reprotoxic Cat2 code R61, Xi codes R36/37/38. Further more it is submitted to the Toxic Release Inventory (SARA Title III Section 313).

Similarly, DMAc or N,N-Dimethylacetamide is covered by index number 616-011-00-4 of Regulation (EC) No 1272/2008 in Annex VI, part 3, Table 3.1 (the list of harmonised classification and labelling of hazardous substances) as toxic for reproduction category 1 B (H360D: "May damage the unborn child"). The corresponding classification in Annex VI, part 3, Table 3.2 (the list of harmonised and classification and labelling of hazardous substances from Annex I to Directive 67/548/EEC) of Regulation (EC) No 1272/2008 is toxic for reproduction category 2 (R61:"May cause harm to the unborn child").

The present invention thus provides a solution for obviating to environmental and safety concerns which arise in using NMP, DMAc or other similar solvents and provides an alternative method for manufacturing porous membrane membranes based on VDF polymers.

N,N-dimethylmethoxyacetamide has been already proposed in the past as suitable replacement/environmentally friendly solvent for solubilisation of VDF polymers.

JP 2010222262 (IDEMITSU KOSAN CO) 07.10.2010 discloses the use of certain solvents, including those of formula:

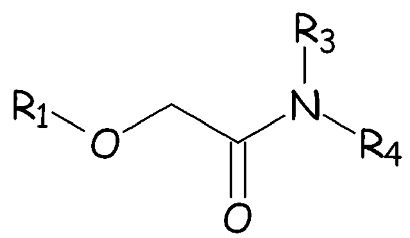

with each of $R_1$, $R_3$ and $R_4$ being C1-C4 alkyl groups, as alternative, environmentally friendly, solvents to NMP, for the manufacture of VDF polymer solutions, both for coating, cast film manufacture and hollow fibers manufacture.

Still, patent document GB 845634 (DUPONT DE NEMOURS) 24.08.1960 teaches the manufacture of certain mixtures of VDF polymer and latent solvents (in weight rations from 10/90 to 85/15 VDF polymer/latent solvent) at high temperature, followed by processing, still at high temperature, by extrusion, so as to provide a film, followed by quenching, possibly in a liquid bath. A long list of latent solvents (generally understood to designate solvents which are able to dissolve PVDF at high temperature, but from which the polymer will precipitate upon cooling), is provided therein including gamma-butyrolactone, N-methyl-2-pyrrolidone, gamma-valerolactone, propylene carbonate, ethylene carbonate, N-acetylmorpholine, methyl salicylate, cyclohexanone, dimethyl sulpholane, and tetramethylene sulphone. Of these, gamma-butyrolactone, N-methyl-2-pyrrolidone, gamma-valerolactone, propylene carbonate, ethylene carbonate were used in working embodiments exemplified therein.

Nevertheless, the selection of an alternative solvent for the manufacture of membranes of fluorinated polymers, and more particularly of VDF polymers, is not an easy task, because the solvent should not only be able to solubilize the fluropolymer, but also to solubilize suitable pore forming agent(s) and being able to deliver in the processing method for membrane manufacture adequate pore-forming ability, hence providing for membrane of ordered and predictable structure, exhibiting appropriate performances in separation technologies.

Hence, although NN-dimethylmethoxyacetamide has been already suggested in the past as possible replacement to NMP for certain fluoropolymers' processing from solution, there still remain a need in the art for techniques for porous membranes manufacture, which, in addition of not necessitating the use of solvents raising increasing environmental concerns, indeed provide membranes having outstanding properties and hence separation behaviour.

Summary of invention

The invention thus pertains to a method for manufacturing a fluoropolymer membrane comprising the steps of:

(i) preparing a fluoropolymer [solution (SF)] comprising:

- at least one fluoropolymer [polymer (F)];
- at least one pore forming agent [agent (P)];
- a solvent mixture [mixture (M)] comprising an amount exceeding 50 % wt of N,N-dimethylmethoxyacetamide, with respect to the total weight of the mixture (M);

(ii) processing said solution (SF) into a film;
(iii) immersing said film in a non-solvent bath.

The Applicant has found that the solvent mixture comprising major amount of N,N-dimethylmethoxyacetamide, in addition of possessing a totally positive environmental profile, with no environmental nor toxicological concerns, is effective in providing fluoropolymer/pore forming agent solutions suitable for the manufacture of membranes, delivering superior membranes' performances and properties over those achieved with traditional solvents.

This finding is particularly surprisingly, in view of the fact that solvents have not been considered for now having a major impact on final membranes' properties to the extent effective solubilization of ingredients was achieved.

Now, the Applicant has found that through the use of the solvent mixture including N,N-dimethylmethoxyacetamide, membranes although possessing substantially similar porosity and other relevant properties, were found to exhibit a significantly improved flux.

This and other objects, advantages, and features of the invention will be more readily understood and appreciated by reference to the detailed description of the invention.

The term "membrane" is used herein in its usual meaning, that is to say it refers to a discrete, generally thin, interface that moderates the permeation of chemical species in contact with it. This interface may be molecularly homogeneous, that is, completely uniform in structure (dense membrane), or it may be chemically or physically heterogeneous, for example containing voids, holes or pores of finite dimensions (porous membrane).

Porous membranes are generally characterized by the average pore diameter and the porosity, i.e. the fraction of the total membrane that is porous.

Membranes having a uniform structure throughout their thickness are generally known as symmetrical membranes, which can be either dense or porous; membranes having pores which are not homogeneously distributed throughout their thickness are generally known as asymmetric membranes. Asymmetric membranes are characterized by a thin selective layer (0.1-1 $\mu$m thick) and a highly porous thick layer (100-200 $\mu$m thick) which acts as a support and has little effect on the separation characteristics of the membrane.

Membranes can be in the form of a flat sheet or in the form of tubes. Tubular membranes are classified based

on their dimensions in tubular membranes having a diameter greater than 3 mm; capillary membranes, having a diameter comprised between 0.5 mm and 3 mm; and hollow fibers having a diameter of less than 0.5 mm. Oftentimes capillary membranes are also referred to as hollow fibres.

Flat sheet membranes are generally preferred when high fluxes are required whereas hollow fibres are particularly advantageous in applications where compact modules with high surface areas are required.

Depending on their applications membranes may also be supported to improve their mechanical resistance. The support material is selected to have a minimal influence on the selectivity of the membrane.

The solution (SF) comprises polymer (F), agent (P) and a mixture of solvents [mixture (M)].

The term "solvent" is used herein in its usual meaning, that is it indicates a substance capable of dissolving another substance (solute) to form an uniformly dispersed mixture at the molecular level. In the case of a polymeric solute it is common practice to refer to a solution of the polymer in a solvent when the resulting mixture is transparent and no phase separation is visible in the system. Phase separation is taken to be the point, often referred to as "cloud point", at which the solution becomes turbid or cloudy due to the formation of polymer aggregates.

The mixture (M) may comprise, possibly in addition to N,N-dimethylmethoxyacetamide, at least one further solvent.

If used, the amount of said further solvent is lower than the amount of N,N-dimethylmethoxyacetamide. Still, the amount of said further solvent, when present, is preferably lower than 25 % wt, preferably lower than 20 % wt, more preferably lower than 15 % wt, even more preferably lower than 10 % wt, with respect to the total weight of mixture (M).

Exemplary embodiments of further solvents which may be used in the mixture (M) of the composition of the present invention include notably:

- aliphatic hydrocarbons including, more particularly, the paraffins such as, in particular, pentane, hexane, heptane, octane, nonane, decane, undecane, dodecane or cyclohexane, and naphthalene and aromatic hydrocarbons and more particularly aromatic hydrocarbons such as, in particular, benzene, toluene, xylenes, cumene, petroleum fractions composed of a mixture of alkylbenzenes;
- aliphatic or aromatic halogenated hydrocarbons including more particularly, perchlorinated hydrocarbons such as, in particular, tetrachloroethylene, hexachloroethane ; partially chlorinated hydrocarbons such as dichloromethane, chloroform, 1,2-dichloroethane, 1,1,1-trichloroethane, 1,1,2,2-tetrachloroethane, pentachloroethane, trichloroethylene, 1-chlorobutane, 1,2-dichlorobutane; monochlorobenzene, 1,2-dichlorobenzene, 1,3-dichlorobenzene, 1,4-dichlorobenzene, 1,2,4-trichlorobenzene or mixture of different chlorobenzenes;
- aliphatic, cycloaliphatic or aromatic ether oxides, more particularly, diethyl oxide, dipropyl oxide, diisopropyl oxide, dibutyl oxide, methyltertiobutylether, dipentyl oxide, diisopentyl oxide, ethylene glycol dimethyl ether, ethylene glycol diethyl ether, ethylene glycol dibutyl ether benzyl oxide; dioxane, tetrahydrofuran (THF);
- glycol ethers such as ethylene glycol monomethyl ether, ethylene glycol monoethyl ether, ethylene glycol monopropyl ether, ethylene glycol monoisopropyl ether, ethylene glycol monobutyl ether, ethylene glycol monophenyl ether, ethylene glycol monobenzyl ether, diethylene glycol monomethyl ether, diethylene glycol monoethyl ether, diethylene glycol mono-n-butyl ether;
- glycol ether esters such as ethylene glycol methyl ether acetate, ethylene glycol monoethyl ether acetate, ethylene glycol monobutyl ether acetate;
- alcohols, including polyhydric alcohols, such as methyl alcohol, ethyl alcohol, diacetone alcohol, ethylene glycol;
- ketones such as acetone, methylethylketone, methylisobutyl ketone, diisobutylketone, cyclohexanone, isophorone;
- linear or cyclic esters such as : isopropyl acetate, n-butyl acetate, methyl acetoacetate, dimethyl phthalate, $\gamma$-butyrolactone;
- linear or cyclic carboxamides such as N,N-dimethylacetamide (DMAC), N,N-diethylacetamide, dimethylformamide (DMF), diethylformamide or N-methyl-2-pyrrolidinone (NMP);
- organic carbonates for example dimethyl carbonate, diethyl carbonate, dipropyl carbonate, dibutyl carbonate, ethylmethyl carbonate, ethylene carbonate, vinylene carbonate;
- phosphoric esters such as trimethyl phosphate, triethyl phosphate;
- ureas such as tetramethylurea, tetraethylurea.

For embodiments wherein the mixture (M) comprises a further solvent, mixture (M) is preferably free from solvents qualified as Carcinogenic, Mutagenic or Toxic to Reproduction according to chemical safety classification (CMR solvents); more specifically, the mixture (M) is advantageously substantially free from NMP, DMF and DMAC.

Nevertheless, mixtures (M) substantially free from any further solvent different from N,N-dimethylmethoxyacetamide, i.e. consisting essentially of N,N-dimethylmethoxyacetamide are those preferred.

Minor amount of impurities, solvent traces and residues might be present in the mixture (M) beside N,N-dimethylmethoxyacetamide, without these affecting the properties of the mixture (M). A total amount of said other components up to about 1 % wt, based on the total weight of mixture (M) is generally tolerated.

Preferably, the composition of the invention comprises only one polymer (F).

For the purpose of the present invention, the term "fluoropolymer [polymer (F)]" is understood to mean a fluoropolymer comprising recurring units derived from at least one fluorinated monomer.

By the term "fluorinated monomer" it is hereby intended to denote an ethylenically unsaturated monomer comprising at least one fluorine atom.

The term "at least one fluorinated monomer" is understood to mean that the polymer (F) may comprise recurring units derived from one or more than one fluorinated monomers. In the rest of the text, the expression "fluorinated monomers" is understood, for the purposes of the present invention, both in the plural and the singular, that is to say that they denote both one or more than one fluorinated monomers as defined above.

Non limitative examples of suitable fluorinated monomers include, notably, the followings:

- $C_3$-$C_8$ perfluoroolefins such as tetrafluoroethylene (TFE) and hexafluoropropene (HFP);
- $C_2$-$C_8$ hydrogenated fluoroolefins such as vinyl fluoride, vinylidene fluoride (VDF) and 1,2-difluoroethylene and trifluoroethylene (TrFE);
- perfluoroalkylethylenes of formula $CH_2$=CH-$R_{f0}$ wherein $R_{f0}$ is a $C_1$-$C_6$ perfluoroalkyl group;
- chloro- and/or bromo- and/or iodo-$C_2$-$C_6$ fluoroolefins such as chlorotrifluoroethylene (CTFE);
- (per)fluoroalkylvinylethers of formula $CF_2$=CFOR$_{f1}$ wherein $R_{f1}$ is a $C_1$-C $_6$ fluoro- or perfluoroalkyl group, e.g. $CF_3$, $C_2F_5$, $C_3F_7$;
- $CF_2$=CFOX$_0$ (per)fluoro-oxyalkylvinylethers, wherein $X_0$ is a $C_1$-$C_{12}$ alkyl group, a $C_1$-$C_{12}$ oxyalkyl group or a $C_1$-$C_{12}$ (per)fluorooxyalkyl group comprising one or more ether groups, such as perfluoro-2-propoxy-propyl group;
- (per)fluoroalkylvinylethers of formula $CF_2$=CFOCF$_2$OR$_{f2}$ wherein $R_{f2}$ is a $C_1$-$C_6$ fluoro- or perfluoroalkyl group, e.g. $CF_3$, $C_2F_5$, $C_3F_7$ or a $C_1$-$C_6$ (per)fluorooxyalkyl group comprising one or more ether groups, such as -C $_2$F5-O-$CF_3$;
- functional (per)fluoro-oxyalkylvinylethers of formula $CF_2$=CFOY$_0$, wherein $Y_0$ is a $C_1$-$C_{12}$ alkyl or (per)fluoroalkyl group, a $C_1$-$C_{12}$ oxyalkyl group or a $C_1$-$C_{12}$ (per)fluorooxyalkyl group comprising one or more ether groups and $Y_0$ comprising a carboxylic or sulfonic acid group, in its acid, acid halide or salt form; and
- fluorodioxoles, preferably perfluorodioxoles.

The polymer (F) may further comprise at least one hydrogenated monomer.

By the term "hydrogenated monomer" it is hereby intended to denote an ethylenically unsaturated monomer comprising at least one hydrogen atom and free from fluorine atoms.

The term "at least one hydrogenated monomer" is understood to mean that the polymer (F) may comprise recurring units derived from one or more than one hydrogenated monomers. In the rest of the text, the expression "hydrogenated monomers" is understood, for the purposes of the present invention, both in the plural and the singular, that is to say that they denote both one or more than one hydrogenated monomers as defined above.

Non limitative examples of suitable hydrogenated monomers include, notably, non-fluorinated monomers such as ethylene, propylene, vinyl monomers such as vinyl acetate, (meth)acrylic monomers and styrene monomers such as styrene and p-methylstyrene.

The polymer (F) may be semi-crystalline or amorphous.

The term "semi-crystalline" is hereby intended to denote a polymer (F) having a heat of fusion of from 10 to 90 J/g, preferably of from 30 to 60 J/g, more preferably of from 35 to 55 J/g, as measured according to ASTM D3418-08.

The term "amorphous" is hereby intended to denote a polymer (F) having a heat of fusion of less than 5 J/g, preferably of less than 3 J/g, more preferably of less than 2 J/g as measured according to ASTM D-3418-08.

The polymer (F) is preferably semi-crystalline.

The polymer (F) is preferably selected from the group consisting of:

- polymers (F-1) comprising recurring units derived from at least one fluorinated monomer selected from the group consisting of tetrafluoroethylene (TFE), chlorotrifluoroethylene (CTFE), and mixtures thereof; and from at least one hydrogenated monomer selected from the group consisting of ethylene, propylene, isobutylene and their mixtures;, optionally containing one or more additional comonomers, typically in amounts of from 0.01% to 30% by moles, based on the total amount of TFE and/or CTFE and said hydrogenated monomer(s); and
- polymers (F-2) comprising recurring units derived from vinylidene fluoride (VDF) and, optionally, from at least one fluorinated monomer different from VDF.

The polymer (F-1) preferably comprises recurring units derived from ethylene (E) and at least one of chlorotrifluoroethylene (CTFE) and tetrafluoroethylene (TFE).

Polymers (F-1) wherein the fluorinated monomer is mainly chlorotrifluoroethylene (CTFE) and the hydrogenated monomer is ethylene (E) will be identified herein below as ECTFE copolymers; polymers (F-1) wherein the fluorinated monomer is mainly tetrafluoroethylene (TFE) and the hydrogenated monomer is ethylene (E) will be identified herein

below as ETFE copolymers.

The polymer (F-1) more preferably comprises:

(a) from 30% to 60% by moles, preferably from 35% to 55% by moles of recurring units derived from ethylene (E);
(b) from 50% to 70% by moles, preferably from 55% to 65% by moles of recurring units derived from at least one fluorinated monomer selected from the group consisting of chlorotrifluoroethylene (CTFE) and tetrafluoroethylene (TFE); and
(c) from 0.01% to 5% by moles, preferably from 0.05% to 2.5% by moles, based on the total amount of monomers (a) and (b), of recurring units derived from one or more additional comonomers.

The comonomer (c) of the polymer (F-1) is preferably selected from the group consisting of hydrogenated monomers, preferably from the group consisting of (meth)acrylic monomers.

Among polymers (F-1), ECTFE copolymers, i.e. copolymers of ethylene and CTFE and, optionally, a third comonomer are preferred.

ECTFE polymers suitable in the process of the invention typically have a melting temperature of at most 250°C. The ECTFE polymer typically has a melting temperature of at least 120°C, preferably of at least 150°C.

The melting temperature is determined by Differential Scanning Calorimetry (DSC) at a heating rate of 10°C/min, according to ASTM D3418.

ECTFE polymers which have been found to give particularly good results are those consisting essentially of recurring units derived from:

(a) from 35% to 55% by moles of ethylene (E);
(b) from 55% to 65% by moles of chlorotrifluoroethylene (CTFE).

End chains, defects or minor amounts of monomer impurities leading to recurring units different from those above mentioned can be still comprised in the preferred ECTFE, without this affecting properties of the material.

The ECTFE polymer typically has a melt flow rate comprised between 0.01 and 75 g/10 min, preferably between 0.1 and 50 g/10 min, more preferably between 0.5 and 30 g/10 min, as measured according to ASTM D3275 standard procedure at 275°C and 2.16 Kg.

The polymer (F) is preferably a polymer (F-2), as above detailed, that is to say a VDF polymer. The polymer (F-2) preferably comprises:

(a') at least 60% by moles, preferably at least 75% by moles, more preferably at least 85% by moles of recurring units derived from vinylidene fluoride (VDF);
(b') optionally, from 0.1% to 15% by moles, preferably from 0.1% to 12% by moles, more preferably from 0.1% to 10% by moles of recurring units derived from a fluorinated monomer selected from vinyl fluoride ($VF_1$), chlorotrifluoroethylene (CTFE), hexafluoropropene (HFP), tetrafluoroethylene (TFE), trifluoroethylene (TrFE), perfluoromethylvinylether (PMVE) and mixtures therefrom; and
(c') optionally, from 0.01% to 20% by moles, preferably from 0.05% to 18% by moles, more preferably from 0.1% to 10% by moles of recurring units derived from at least one hydrogenated comonomer.

The hydrogenated comonomer (c') of the polymer (F-2) is preferably selected from the group consisting of (meth)acrylic monomers.

The polymer (F-2) more preferably comprises:

(a') at least 60% by moles, preferably at least 75% by moles, more preferably at least 85% by moles of recurring units derived from vinylidene fluoride (VDF);
(b') from 0% to 15% by moles, preferably from 0.1 % to 12% by moles, more preferably from 0.1% to 10% by moles of recurring units derived from a fluorinated monomer selected from vinyl fluoride ($VF_1$), chlorotrifluoroethylene (CTFE), hexafluoropropene (HFP), tetrafluoroethylene (TFE), trifluoroethylene (TrFE), perfluoromethylvinylether (PMVE) and mixtures therefrom; and
(c') optionally, from 0.01% to 20% by moles, preferably from 0.05% to 18% by moles, more preferably from 0.1% to 10% by moles of recurring units derived from at least one hydrogenated comonomer, preferably of at least one hydrogenated monomer selected from the group consisting of (meth)acrylic monomers.

The (meth)acrylic monomer preferably complies with formula (I) here below:

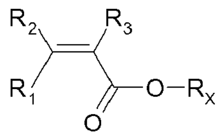

(I)

wherein:

- $R_1$, $R_2$ and $R_3$, equal to or different from each other, are independently selected from a hydrogen atom and a $C_1$-$C_3$ hydrocarbon group, and
- $R_X$ is a hydrogen atom or a $C_1$-$C_5$ hydrocarbon group comprising at least one hydroxyl group.

The term "at least one hydrogenated monomer selected from the group consisting of (meth)acrylic monomers" is understood to mean that the polymer (F) may comprise recurring units derived from one or more than one (meth)acrylic monomers as defined above. In the rest of the text, the expression "(meth)acrylic monomers" is understood, for the purposes of the present invention, both in the plural and the singular, that is to say that it denotes both one or more than one (meth)acrylic monomers as defined above.

Determination of average mole percentage of recurring units derived from (meth)acrylic monomers in the polymer (F) can be performed by any suitable method. Mention can be notably made of acid-base titration methods, well suited e.g. for the determination of the acrylic acid content, of NMR methods, adequate for the quantification of (meth)acrylic monomers comprising aliphatic hydrogen atoms in side chains, of weight balance based on total fed (meth)acrylic monomer and unreacted residual (meth)acrylic monomer during polymer (F) manufacture.

The (meth)acrylic monomer more preferably complies with formula (I-A) here below:

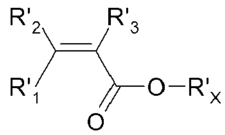

(I-A)

wherein:

- $R'_1$, $R'_2$ and $R'_3$ are hydrogen atoms, and
- $R'_X$ is a hydrogen atom or a $C_1$-$C_5$ hydrocarbon group comprising at least one hydroxyl group.

Non-limitative examples of suitable (meth)acrylic monomers of formula (II) as defined above include, notably, acrylic acid, methacrylic acid, hydroxyethyl(meth)acrylate, hydroxypropyl(meth)acrylate, hydroxyethylhexyl(meth)acrylate.

Still more preferably, polymer (F) is a polymer (F-2) consisting essentially of:

(a') at least 85 % by moles, preferably at least 88% by moles, more preferably at least 90% by moles of recurring units derived from vinylidene fluoride (VDF);

(b') from 0% to 15% by moles, preferably from 0.1 % to 12% by moles, more preferably from 0.1 % to 10% by moles of a fluorinated monomer selected from vinyl fluoride ($VF_1$), chlorotrifluoroethylene (CTFE), hexafluoropropene (HFP), tetrafluoroethylene (TFE), trifluoroethylene (TrFE), perfluoromethylvinylether (PMVE) and mixtures therefrom

Polymers (F) which have been found particularly advantageous within the frame of the present invention are VDF homopolymers, consisting essentially of recurring units derived from vinylidene fluoride.

End chains, defects or minor amounts of monomer impurities leading to recurring units different from those above mentioned can be still comprised in the preferred VDF polymers, without this affecting properties of the material.

The molecular weight of the polymer (F) is not particularly limited, although it is generally understood that best performances of porous membranes are achieved when the polymer (F) possesses a high molecular weight.

The VDF polymer or polymer (F-2) VDF polymer typically has a melt flow rate comprised between 0.01 and 75 g/10 min, preferably between 0.1 and 50 g/10 min, more preferably between 0.5 and 30 g/10 min, as measured according to ASTM D1238 standard procedure at 230°C under a load of 5 kg.

The selection of pore forming agent is not particularly limited, and those currently used in combination with fluoropolymers (F) can be advantageously employed in the method of the present invention.

Pore forming agents are generally selected among compounds which have solubility both in the mixture (M)

and in the non-solvent bath, So that they will be at least partially removed from the membrane which will be formed, providing for porosity.

It is generally understood that while inorganic compounds like lithium chloride can be used, as well as monomeric organic compounds, including maleic anhydride, polymeric pore forming agents are generally preferred.

In particular, the polymeric pore forming agent is preferably selected from the group consisting of poly(alkylene oxide) and derivatives thereof (POA) and polyvinylpyrrolidone (PVP).

The poly(alkylene oxide) (PAO) are polymers obtained from polymerizing alkylene oxides including ethylene oxide, propylene oxide and mixtures thereof.

Derivatives of PAO can be obtained by reacting hydroxyl end groups thereof with suitable compounds, so as to generate notably ether groups, in particular alkyl ethers, ester groups, for instance acetates and the like.

Nevertheless, PAO having hydroxyl end groups are generally used.

Among PAO, polyethyelene oxide (PEO or PEG) polymers are particularly preferred.

The PAO polymer has a number average molecular weight typically comprised between 100 and 5000000, preferably between 200 and 4000000, more preferably between 300 and 2000000.

The polyvinylpyrrolidone (PVP) is generally a homopolymer, although copolymers of vinylpyrrolidone with other monomers can be advantageously used, said monomers being generally selected from the group consisting of N-vinylcaprolactam, Maleic anhydride, methylmethacrylate, styrene, vinyl acetate, acrylic acid, dimethylaminoethylmethacrylate.

Nevertheless PVP homopolymers are generally employed.

Molecular weight of PVP is not particularly limited. It is nevertheless understood that relatively high molecular weight of PVP are preferred to the sake of processing the solution (SF) into a membrane. Hence the K value of the PVP, universally recognized as suitable measure of its molecular weight, is generally of at least 10, preferably at least 30, even more preferably at least 40. Excellent results have been obtained with a PVP having a K value of from 60 to 120, in particular about 90.

K value of PVP can be determined according to the method described in LOGIN, Robert B.N-Vinylamide Polymers in Encyclopedia of Polymer Science and Technology. JOHN WILEY & SONS, INC, 2002. ISBN 0471440264. p.1-30..

It is generally understood, without this limiting the scope of the invention, that the amount of at least one agent (P) used in step (i) of the process of the invention will determine the porosity and the average pore diameter of the porous membrane obtained by the process of the invention.

The amount of agent (P) is generally comprised between 0.1 and 5 % wt, preferably between 0.5 and 3.5 % wt.

The polymer (F) solution [solution (SF)] can be prepared in step (i) by any conventional manner. For instance, the mixture (M) can be added to the polymer (F) and to the pore forming agent (P), or, preferably, the polymer (F) and the pore forming agent (P) can be added to the mixture (M), or even the polymer (F), the pore forming agent (P) and the mixture (M) can be simultaneously combined.

The solution (SF) is prepared at a temperature of advantageously at least 25°C, preferably at least 30°C, more preferably at least 40°C and even more preferably at least 50°C. The solution (SF) is prepared at a temperature of advantageously less than 180°C, preferably less than 170°C, more preferably less than 160°C, and even more preferably less than 150°C. Higher temperatures can of course be used for the solution (SF) preparation step (i), however they are not preferred from a practical and/or economical point of view.

The overall concentration of the polymer (F) in the solution (SF) should be at least 10% by weight, preferably at least 12% by weight, based on the total weight of the solution. Typically the concentration of the polymer (F) in the solution does not exceed 50% by weight, preferably it does not exceed 40% by weight, more preferably it does not exceed 30% by weight, based on the total weight of the solution (SF).

The solution (SF) may contain additional components, such as nucleating agents, salts, fillers and the like.

The mixing time required to obtain the solution (SF) can vary widely depending upon the rate of solution of the components, the temperature, the efficiency of the mixing apparatus, the viscosity of the solution (SF) being prepared, and the like. Any suitable mixing equipment may be used. Preferably, the mixing equipment is selected to reduce the amount of air entrapped in the solution (SF) which may cause defects in the final membrane. The mixing of the polymer (F) and the mixture (M) may be conveniently carried out in a sealed container, optionally held under an inert atmosphere. Inert atmosphere, and more precisely nitrogen atmosphere has been found particularly advantageous for the preparation of solution (SF) comprising PVP.

In general the solubility of the polymer (F) in the solvent mixture (M) at the temperature of the solution during the step (ii) of the method of the invention should be greater than 10% by weight, preferably greater than 12% by weight, more preferably greater than 15% by weight, with respect to the total weight of the solution.

The term "solubility" is defined herein as the maximum amount of polymer, measured in terms of weight of the polymer per weight of solution, which dissolves at a given temperature affording a transparent homogeneous solution without the presence of any phase separation in the system.

Further in addition, a limited amount of a non-solvent for polymer (F) may be added to solution (SF) obtained in step (i), in an amount generally below the level required to reach the cloud point (less than 40 % wt, preferably less than 25 % wt, based on the weight of solution (SF). Such non-solvent will be generally the same as the one used in step (iii) of the process. Non-solvent will thus be described in step (iii) below. Without being bound by this theory, it is generally understood that the addition of an amount of non-solvent in solution (SF) will increase the rate of demixing/coagulation in step (iii), so as to provide a more advantageous membrane morphology.

Once a homogenous and transparent solution (SF) is prepared, the solution (SF) is processed into a film.

The term "film" is used herein to refer to the layer of solution (SF) obtained after the processing of the same. Depending on the final form of the membrane the film may be either flat, when flat membranes are required, or tubular in shape, when tubular or hollow fiber membranes are to be obtained.

The temperature of the solution during the processing step (ii) may be or may be not the same as the temperature during the solution preparation step (i). The temperature of the solution during the processing step (ii) typically does not exceed 180°C, preferably it does not exceed 170°C, more preferably it does not exceed 160°C, even more preferably it does not exceed 150°C.

During the processing step (ii) the solution (SF), lower boundary for the processing temperature are not critical, provided that the solution (SF) still maintains adequate solubility and viscosity properties. Ambient temperature can be notably used.

The viscosity of the solution (SF) at the temperature of the processing step (ii) is typically at least 1 Pa.s. The viscosity of the solution (SF) in said conditions typically does not exceed 100 Pa.s.

Conventional techniques can be used for processing the solution (SF) into a film, being understood that casting techniques are preferred.

Different casting techniques are used depending on the final form of the membrane to be manufactured. When the final product is a flat membrane the polymer solution is cast as a film over a flat support, typically a plate, a belt or a fabric, or another microporous supporting membrane, by means of a casting knife or a draw-down bar.

Accordingly, in its first embodiment the method of the invention comprises a step (ii) of casting the solution (SF) into a flat film on a support.

Hollow fibers and capillary membranes can be obtained by the so-called wet-spinning process. In such a process the solution (SF) is generally pumped through a spinneret, that is an annular nozzle comprising at least two concentric capillaries: a first outer capillary for the passage of the solution (SF) and a second inner one for the passage of a supporting fluid, generally referred to as "lumen". The lumen acts as the support for the casting of the solution (SF) and maintains the bore of the hollow fiber or capillary precursor open. The lumen may be a gas, or, preferably, a liquid at the conditions of the spinning of the fiber. The selection of the lumen and its temperature depends on the required characteristics of the final membrane as they may have a significant effect on the size and distribution of the pores in the membrane. In general the lumen is not a strong non-solvent for the polymer (F) or, alternatively, it contains a solvent or weak solvent for the polymer (F). The lumen is typically miscible with the non-solvent and with the solvent for the polymer (F). The temperature of the lumen generally approximates the temperature of the solution (SF).

At the exit of the spinneret, after a short residence time in air or in a controlled atmosphere, the hollow fiber or capillary precursor is immersed in the non-solvent bath wherein the polymer precipitates forming the hollow fiber or capillary membrane.

Accordingly, in its second embodiment the process of the invention comprises a step (ii) of casting the polymer solution into a tubular film around a supporting fluid.

The casting of the polymer solution is typically done through a spinneret. The supporting fluid forms the bore of the final hollow fiber or capillary membrane. When the supporting fluid is a liquid, immersion of the fiber precursor in the non-solvent bath also advantageously removes the supporting fluid from the interior of the fiber.

Tubular membranes, because of their larger diameter, are produced using a different process from the one employed for the production of hollow fiber membranes.

In its third embodiment the process of the invention comprises a step (ii) of casting the polymer solution into a tubular film over a supporting tubular material.

After the processing of the solution (SF) has been completed so as to obtain a film, in whichever form, as above detailed, said film is immersed into a non-solvent bath in step (iii). This step is generally effective for inducing the precipitation of the polymer (F) from the solution (SF). The precipitated polymer (F) thus advantageously forms the final membrane structure.

As used herein the term "non-solvent" is taken to indicate a substance incapable of dissolving a given component of a solution or mixture.

Suitable non-solvents for the polymer (F) are water and alcohols, including polyhydric alcohols, and preferably aliphatic alcohols, more preferably aliphatic alcohols having a short chain, for example from 1 to 6 carbon atoms, most preferably methanol, ethanol and isopropanol. Blends of said preferred non-solvents, i.e. comprising water and one or more aliphatic alcohols can be used. Preferably, the non-solvent of the non-solvent bath is selected from the group

consisting of water,

- aliphatic alcohols as above defined, and mixture thereof. Further in addition, the non-solvent bath can comprise in addition to the non-solvent (e.g. in addition to water, to aliphatic alcohol or to mixture of water and aliphatic alcohols, as above detailed) small amounts (typically of up to 40 % wt, with respect to the total weight of the non-solvent bath, generally 25 to 40 % wt)) of a solvent for the polymer (F). Use of solvent/non-solvent mixtures advantageously allows controlling the porosity of the membrane. The non-solvent is generally selected among those miscible with the mixture (M) used for the preparation of the solution (SF). Preferably the non-solvent in the process of the invention is water. Water is the most inexpensive non-solvent and it can be used in large amounts. The mixture (M) is advantageously miscible and soluble in water, which is an additional advantage of the method of the present invention.

The pore forming agent (P) is generally at least partially, if not completely, removed from the membrane in the non-solvent bath in step (iii).

The non-solvent in the precipitation bath is usually held at a temperature of at least 0°C, preferably of at least 15°C, more preferably of at least 20°C. The non-solvent in the precipitation bath is usually held at a temperature of less than 90°C, preferably of less than 70°C, more preferably of less than 60°C.

The temperature gradient between the cast film and the non-solvent bath may influence the pore size and/or pore distribution in the final membrane as it affects the rate of precipitation of the polymer (F) from the solution (SF). If precipitation is rapid, a skin will generally form on the surface of the cast film in contact with the non-solvent which will typically slow down the diffusion of the non-solvent in the bulk of the polymer solution leading to a membrane with an asymmetric structure. If precipitation is slow, the pore-forming liquid droplets of the solvent-rich liquid phase, which forms upon contact with the non-solvent, usually tend to agglomerate while the polymer solution is still fluid. As a consequence the membrane will have a more homogeneous, symmetrical structure. The appropriate temperature of the non-solvent bath can be determined for each specific case with routine experiments.

Once removed from the precipitation bath the membrane may undergo additional treatments, for instance rinsing. As a last step the membrane is typically dried.

The invention further pertains to a membrane obtained by the method as above described.

The membrane obtained from the process of the invention is preferably a porous membrane. Typically the membrane has an asymmetric structure. The porosity of the membrane may range from 3 to 90%, preferably from 5 to 80%.

The pores may have an average diameter of at least 0.001 μm, of at least 0.005 μm, of at least 0.01 μm, of at least 0.1 μm, of at least 1 μm, of at least 10 μm and of at most 50 μm. Suitable techniques for the determination of the average pore size in porous membranes are described for instance in "Membranes and Membrane Separation Processes", by H. Strathmann in "Ullmann's Encyclopedia of Industrial Chemistry", 7th edition, published by John Wiley & Sons, Inc. (DOI: 10.1002/14356007.a16_187.pub2).

The invention will be now described in more details with reference to the following examples, whose purpose is merely illustrative and not intended to limit the scope of the invention.

**Raw materials**

- PVDF is a VDF homopolymer commercially available from Solvay Specialty Polymers Italy S.p.A. under the trade name SOLEF® 1015 PVDF;
- PVP is a polyvinylpyrrolidone polymer commercially available as K90 from BASF
- N,N-dimethylmethoxyacetamide (MAADA, herein after) purity 98%, available from Solvay
- N-methyl-2-pyrrolidone (NMP, hereinafter), purity 98 % available from Sigma Aldrich

**General procedure for the manufacture of the solution of fluoropolymer for membrane manufacture.**

Polymer solutions were prepared with a concentration of VDF polymer of 14 % wt in NMP or MAADA, in combination with PVP, where applicable. Polymer ingredient(s) were added under agitation in the first 60 seconds of the dissolution procedure. The solutions were agitated for several hours at a temperature of 65°C in 100 ml closed bottles with magnetic stirrer until complete dissolution of the components was achieved. The polymeric dope were left under agitation at room temperature overnight and then ultra-sonicated for 30 min at 40°C before being possibly used for membranes manufacture. Table 2 summarizes the obtained data.

**Table 2**

| Run | PVDF | PVP | NMP | MAADA | ***V t0**** | ***V t1***** |
|---|---|---|---|---|---|---|
| | (% wt) | (% wt) | (% wt) | (% wt) | ***(cPoise)*** | ***(cPoise)*** |
| | | | | | | |
| 1C | 14 | 0 | 86 | 0 | 5950 | 6130 |
| 2C | 14 | 3 | 83 | 0 | 19300 | 20400 |
| 3C | 14 | 5 | 81 | 0 | 38040 | 38120 |
| 4 | 14 | 0 | 0 | 86 | 9440 | 9180 |
| 5 | 14 | 3 | 0 | 83 | 27670 | 28940 |
| 6 | 14 | 5 | 0 | 81 | 55890 | 55870 |
| *: V t0: viscosity of the solution, as measured immediately after preparation of the same; **: V t1: viscosity of the solution, as measured 25 days after preparation of the same, while maintaining solution at room temperature (25°C). | | | | | | |

Viscosity measurements

Rotational steady state shear measurements were performed using a Rheometric Scientific "RFS III" rheogoniometer in the concentric cylinder configuration (Couette) at 30 °C. Flow curves were obtained with a sweep performed from the lowest obtainable shear rate (0.02 s-1) to the highest defined by the maximum torque that the instrument can reach. In all the cases a quite large Newtonian range was observed. Viscosity values in the table represent the Newtonian plateau of the flow curves.

PVDF was found to be soluble up to at least to a total concentration in solid of 19% wt in N,N-dimethylmethoxyacetamide; solutions therefrom were found to remain stable against precipitation of the polymer, with substantially no change in their liquid viscosity. While liquid viscosity was found to be higher than in corresponding solutions in NMP, such difference was not of significance and yet viscosities in MAADA were found to be within appropriate ranges for further processing into membranes.

**Procedure for casting a film and coagulating the membrane in a non-solvent bath**

Flat sheet porous membranes were prepared by filming the polymeric solution over a suitable smooth glass support by means of an automatized casting knife. Each trial is a flat sheet with dimensions 30x20 $cm^2$ Membrane casting was performed by holding polymer solutions, the casting knife and the support temperatures at 25°C. The Knife gap was set to 250 $\mu$m. After casting, polymeric films were immediately immersed in a coagulation bath in order to induce phase inversion. The coagulation bath consisted of pure de-ionized water. After coagulation the membranes were washed several times in the following days in order to remove residual traces of solvent.

Permeability measurements

Water flux (J) through each membrane at given pressure, is defined as the volume which permeates per unit area and per unit time. The flux is calculated by the following equation: $J = \frac{V}{A\,\Delta t}$ where V (L) is the volume of permeate, A ($m^2$) is the membrane area, and $\Delta$t (h) is the operation time.

Water flux measurements were conducted at room temperature using a dead-end configuration under a constant nitrogen pressure of **1 bar**. Membrane discs with an effective area of 11.3 $cm^2$ were cut from the items stored in water and placed on a metal plate. The thickness of each sample was measured using a digital caliper. For each material, flux and thickness shown in the graphs below are the average of at least three different discs.

Porosity

Membrane porosity ($\varepsilon_m$) was determined according to the gravimetric method, described in the literature (s*ee for example:* P. Sukitpaneenit, T. S. Chung, "Molecular elucidation of morphology and mechanical properties of PVDF hollow fiber membranes from aspects of phase inversion, crystallization and rheology". Journal of Membrane Science

340 (2009) pp 192-205*)*. Porosity is defined as the ratio between the volume of voids and the total volume occupied by the membrane. Perfectly dry membrane pieces were weighed and impregnated in isopropylic alcohol (IPA) for 24h; after this time, the excess of the liquid was removed with tissue paper, and membranes weight was measured again. Finally, from the dry and the wet weight of the sample, it is possible to evaluate the porosity of the membrane using the following formula:

$$\varepsilon(\%) = \frac{Ww - Wd/\rho w}{Ww - Wd/\rho w + (\frac{Wd}{\rho P})} \, x\, 100$$

wherein $W_w$ is the weight of the wet membrane, $W_d$ is the weight of the dry membrane, $\rho_w$ is the IPA density (0.785 g/cm$^3$) and ρp is the polymer density (assumed to be 1.78 g/cm$^3$ for PVDF). For all membranes types, at least three measurements were performed; then, average values and corresponding standard deviations were calculated.

Bubble point determination

Membranes bubble points, largest pore size and pore size distribution were determined following ASTM F316 method, using a Capillary Flow Porometer "Porolux 1000" (Porometer-Belgium). For each test, membranes samples were initially fully wetted using Fluorinert FC 43 (fluorinated fluid with a very low surface tension of 16 dyne/cm) for some hours and placed in the sample holder. Inert gas (nitrogen) was fed to the sample with increasing pressure. When it reached a point that exceeded the capillary force of the fluid within the largest pore, the first gas bubble passed through the membrane: this is referred as the bubble point (B.P.) and corresponds to the largest pore present in the membrane. The measurement of bubble point is based on the Laplace's equation: dp = 4 γcosθ / DP where dp is the pore diameter, γ is the surface tension of the liquid, θ is the contact angle of the liquid (assumed to be 0 in case of full wetting, which means cosθ = 1) and DP is the external applied pressure.

Results are summarized in Table 3 below.

**Table 3**

| Run | Flux | Porosity | Bubble point | Thickness |
|---|---|---|---|---|
| | (L/(m$^2$xh)) | (%) | (bar) | (μm) |
| Solution 2C | 770 | 89.5 | >3 | 135 |
| Solution 5 | 2000 | 90.3 | >3 | 125 |

Data provided above well demonstrate that the use of MAADA as a solvent, while providing PVDF membranes having substantially same porosity and thickness, ensures achieving membranes performances well beyond those generally obtained using NMP as solvent. Indeed the flux value is more than doubled when using MAADA instead of NMP in substantially analogous conditions.

## Claims

**1.** A method for manufacturing a fluoropolymer membrane comprising the steps of:

(i) preparing a fluoropolymer [solution (SF)] comprising:

- at least one fluoropolymer [polymer (F)];
- at least one pore forming agent [agent (P)];
- a solvent mixture [mixture (M)] comprising an amount exceeding 50 % wt of N,N-dimethylmethoxyacetamide, with respect to the total weight of the mixture (M);

(ii) processing said solution (SF) into a film;
(iii) immersing said film in a non-solvent bath.

**2.** The method of claim 1, wherein said mixture (M) comprises, in addition to N,N-dimethylmethoxyacetamide, at least one further solvent, generally selected from the group consisting of

- aliphatic hydrocarbons including, more particularly, the paraffins such as, in particular, pentane, hexane, heptane, octane, nonane, decane, undecane, dodecane or cyclohexane, and naphthalene and aromatic hydrocarbons and more particularly aromatic hydrocarbons such as, in particular, benzene, toluene, xylenes, cumene, petroleum fractions composed of a mixture of alkylbenzenes;
- aliphatic or aromatic halogenated hydrocarbons including more particularly, perchlorinated hydrocarbons such as, in particular, tetrachloroethylene, hexachloroethane ; partially chlorinated hydrocarbons such as dichloromethane, chloroform, 1,2-dichloroethane, 1,1,1-trichloroethane, 1,1,2,2-tetrachloroethane, pentachloroethane, trichloroethylene, 1-chlorobutane, 1,2-dichlorobutane; monochlorobenzene, 1,2-dichlorobenzene, 1,3-dichlorobenzene, 1,4-dichlorobenzene, 1,2,4-trichlorobenzene or mixture of different chlorobenzenes;
- aliphatic, cycloaliphatic or aromatic ether oxides, more particularly, diethyl oxide, dipropyl oxide, diisopropyl oxide, dibutyl oxide, methyltertiobutylether, dipentyl oxide, diisopentyl oxide, ethylene glycol dimethyl ether, ethylene glycol diethyl ether, ethylene glycol dibutyl ether benzyl oxide; dioxane, tetrahydrofuran (THF);
- glycol ethers such as ethylene glycol monomethyl ether, ethylene glycol monoethyl ether, ethylene glycol monopropyl ether, ethylene glycol monoisopropyl ether, ethylene glycol monobutyl ether, ethylene glycol monophenyl ether, ethylene glycol monobenzyl ether, diethylene glycol monomethyl ether, diethylene glycol monoethyl ether, diethylene glycol mono-n-butyl ether;
- glycol ether esters such as ethylene glycol methyl ether acetate, ethylene glycol monoethyl ether acetate, ethylene glycol monobutyl ether acetate;
- alcohols, including polyhydric alcohols, such as methyl alcohol, ethyl alcohol, diacetone alcohol, ethylene glycol;
- ketones such as acetone, methylethylketone, methylisobutyl ketone, diisobutylketone, cyclohexanone, isophorone;
- linear or cyclic esters such as : isopropyl acetate, n-butyl acetate, methyl acetoacetate, dimethyl phthalate, $\gamma$-butyrolactone;
- linear or cyclic carboxamides such as N,N-dimethylacetamide (DMAC), N,N-diethylacetamide, dimethylformamide (DMF), diethylformamide or N-methyl-2-pyrrolidinone (NMP);
- organic carbonates for example dimethyl carbonate, diethyl carbonate, dipropyl carbonate, dibutyl carbonate, ethylmethyl carbonate, ethylene carbonate, vinylene carbonate;
- phosphoric esters such as trimethyl phosphate, triethyl phosphate;
- ureas such as tetramethylurea, tetraethylurea.

**3.** The method according to anyone of the preceding claims, wherein said polymer (F) is semi-crystalline and is selected from the group consisting of:

- polymers (F-1) comprising recurring units derived from at least one fluorinated monomer selected from the group consisting of tetrafluoroethylene (TFE), chlorotrifluoroethylene (CTFE), and mixtures thereof; and from at least one hydrogenated monomer selected from the group consisting of ethylene, propylene, isobutylene and their mixtures;, optionally containing one or more additional comonomers, typically in amounts of from 0.01% to 30% by moles, based on the total amount of TFE and/or CTFE and said hydrogenated monomer(s); and
- polymers (F-2) comprising recurring units derived from vinylidene fluoride (VDF) and, optionally, from at least one fluorinated monomer different from VDF.

**4.** The method according to claim 3, wherein the the polymer (F) is preferably a polymer (F-2), said polymer (F-2) comprising:

(a') at least 60% by moles, preferably at least 75% by moles, more preferably at least 85% by moles of recurring units derived from vinylidene fluoride (VDF);
(b') optionally, from 0.1 % to 15% by moles, preferably from 0.1 % to 12% by moles, more preferably from 0.1 % to 10% by moles of recurring units derived from a fluorinated monomer selected from vinyl fluoride ($VF_1$), chlorotrifluoroethylene (CTFE), hexafluoropropene (HFP), tetrafluoroethylene (TFE), trifluoroethylene (TrFE), perfluoromethylvinylether (PMVE) and mixtures therefrom; and
(c') optionally, from 0.01% to 20% by moles, preferably from 0.05% to 18% by moles, more preferably from 0.1 % to 10% by moles of recurring units derived from at least one hydrogenated comonomer.

**5.** The method according to claim 4, wherein polymer (F) is a polymer (F-2) consisting essentially of :

(a') at least 85 % by moles, preferably at least 88% by moles, more preferably at least 90% by moles of recurring units derived from vinylidene fluoride (VDF);
(b') from 0% to 15% by moles, preferably from 0.1 % to 12% by moles, more preferably from 0.1 % to 10% by moles of a fluorinated monomer selected from vinyl fluoride ($VF_1$), chlorotrifluoroethylene (CTFE), hexafluoropropene (HFP), tetrafluoroethylene (TFE), trifluoroethylene (TrFE), perfluoromethylvinylether (PMVE) and mixtures therefrom.

**6.** The method of anyone of the preceding claims, wherein mixture (M) consists essentially of N,N-dimethylmethoxyacetamide.

**7.** The method according to anyone of the preceding claims, wherein the polymeric pore forming agent is selected from the group consisting of poly(alkylene oxide) and derivatives thereof (POA) and polyvinylpyrrolidone (PVP).

**8.** The method of claim 7, wherein the polymeric pore forming agent is a PVP homopolymer, generally having a K value of at least 10, preferably at least 30, even more preferably at least 40.

**9.** The method according to anyone of the preceding claims, wherein the amount of agent (P) is generally comprised between 0.1 and 5 % wt, preferably between 0.5 and 3.5 % wt.

**10.** The method according to anyone of the preceding claims, wherein the overall concentration of the polymer (F) in the solution (SF) is of at least 10% by weight, preferably at least 12% by weight, based on the total weight of the solution.

**11.** The method according to anyone of the preceding claims, said method comprising a step (ii) of casting the solution (SF) into a flat film on a support.

**12.** The method according to anyone of claims 1 to 10, wherein said method comprises a step (ii) of casting the polymer solution (SF) into a tubular film around a supporting fluid.

**13.** The method according to anyone of claims 1 to 10, wherein said method comprises a step (ii) of casting the polymer solution (SF) into a tubular film over a supporting tubular material.

**14.** The method according to anyone of the preceding claims, wherein the non-solvent of the non-solvent bath is selected from the group consisting of water, aliphatic alcohols, and mixture thereof.

**15.** A porous membrane obtained by the method according to anyone of the preceding claims.

Europäisches Patentamt
European Patent Office
Office européen des brevets

# EUROPEAN SEARCH REPORT

Application Number
EP 14 30 5547

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2005/176330 A1 (HAMA YOSHITSUGU [JP] ET AL) 11 August 2005 (2005-08-11)<br>* paragraph [0056]; claim 1 * | 1 | INV.<br>B01D67/00<br>B01D71/32<br>B01D71/34 |
| X<br><br><br>A | WO 02/058828 A1 (INNOVASEP TECHNOLOGY CORP [US]; HERCZEG ATTILA [US])<br>1 August 2002 (2002-08-01)<br>* paragraph [0051] - paragraph [0054] * | 15<br><br><br>1-14 | |
| A,D | JP 2010 222262 A (IDEMITSU KOSAN CO)<br>7 October 2010 (2010-10-07)<br>* abstract; figures * | 1 | |
| X<br><br>A | CN 1 724 586 A (UNIV HARBIN TECHNOLOGY [CN]) 25 January 2006 (2006-01-25)<br>* claims * | 15<br><br>1-14 | |

TECHNICAL FIELDS SEARCHED (IPC)

B01D

The present search report has been drawn up for all claims

1

| Place of search | Date of completion of the search | Examiner |
|---|---|---|
| Munich | 26 September 2014 | Goers, Bernd |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 14 30 5547

This annex lists the patent family members relating to the patent documents cited in the above-mentioned European search report. The members are as contained in the European Patent Office EDP file on
The European Patent Office is in no way liable for these particulars which are merely given for the purpose of information.

26-09-2014

| Patent document cited in search report | Publication date | Patent family member(s) | Publication date |
|---|---|---|---|
| US 2005176330 A1 | 11-08-2005 | JP 4499852 B2 | 07-07-2010 |
| | | JP 2001079368 A | 27-03-2001 |
| | | US 2005176330 A1 | 11-08-2005 |
| WO 02058828 A1 | 01-08-2002 | CA 2434940 A1 | 01-08-2002 |
| | | EP 1359995 A1 | 12-11-2003 |
| | | JP 2004525755 A | 26-08-2004 |
| | | US 2004050791 A1 | 18-03-2004 |
| | | WO 02058828 A1 | 01-08-2002 |
| JP 2010222262 A | 07-10-2010 | NONE | |
| CN 1724586 A | 25-01-2006 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010222262 B
- GB 845634 A, DUPONT DE NEMOURS


### Non-patent literature cited in the description


- **LOGIN, ROBERT B.N.** Vinylamide Polymers in Encyclopedia of Polymer Science and Technology. JOHN WILEY & SONS, INC, 2002, 1-30
- Membranes and Membrane Separation Processes. **H. STRATHMANN.** Ullmann's Encyclopedia of Industrial Chemistry. John Wiley & Sons, Inc
- **P. SUKITPANEENIT ; T. S. CHUNG.** Molecular elucidation of morphology and mechanical properties of PVDF hollow fiber membranes from aspects of phase inversion, crystallization and rheology. *Journal of Membrane Science,* 2009, vol. 340, 192-205